# EUROPÄISCHE PATENTSCHRIFT

(11) **EP 4 013 586 B1**
(45) Veröffentlichungstag und Bekanntmachung des Hinweises auf die Patenterteilung: **28.05.2025**
(21) Anmeldenummer: 20756780.1
(22) Anmeldetag: 29.07.2020
(51) Int. Cl.: B01F 27/90, B01F 31/85, B28C 5/16, B28C 5/48, C04B 40/00

(54) **ZEMENTVORMISCHER, EINE VORRICHTUNG ZUR HERSTELLUNG EINER BETONMISCHUNG UND VERFAHREN ZUR HERSTELLUNG EINER ZEMENTSUSPENSION**
CEMENT PREMIXER, DEVICE FOR PRODUCING A CONCRETE MIXTURE AND METHOD FOR PRODUCING A CEMENT SUSPENSION
PRÉ-MÉLANGEUR DE CIMENT, DISPOSITIF DE PRODUCTION D'UN MÉLANGE DE BÉTON ET PROCÉDÉ DE PRODUCTION D'UNE SUSPENSION DE CIMENT

(30) Priorität: 02.08.2019 DE 102019120939
(43) Veröffentlichungstag der Anmeldung: 22.06.2022
(73) Patentinhaber: Sonocrete GmbH, 03048 Cottbus (DE)
(72) Erfinder: RÖßLER, Christiane, 07749 Jena (DE); REMUS, Ricardo, 03050 Cottbus (DE)
(74) Vertreter: Kleine, Hubertus
(86) Internationale Anmeldenummer: PCT/EP2020/071412
(87) Internationale Veröffentlichungsnummer: WO 2021/023598

(56) Entgegenhaltungen:
- CN-A- 102 284 326
- CN-A- 102 284 326
- CN-A- 107 803 934
- CN-A- 107 803 934
- JP-B2- 3 201 292
- JP-B2- 3 201 292
- RU-C1- 2 496 748
- RU-C1- 2 496 748
- HORST-MICHAEL LUDWIG ET AL: "The Influence of Power Ultrasound on Setting and Strength Development of Cement Suspensions", 20 January 2016 (2016-01-20), pages 1 - 146, XP093105771, Retrieved from the Internet <URL:https://d-nb.info/1125372516/34> [retrieved on 20231127]
- MICHAEL KRAUS: "Einfluss von Leistungs-Ultraschall auf die Fließeigenschaften und frühe Hydratation von Portland-Zementleim", 30 November 2010 (2010-11-30), pages 1 - 145, XP009534880, Retrieved from the Internet <URL:https://d-nb.info/1155729633/34> [retrieved on 20111115], DOI: 10.25643/BAUHAUS-UNIVERSITAET.1393

## Beschreibung

Die Erfindung betrifft einen Zementvormischer zur Herstellung einer Zementsuspension, sowie eine Vorrichtung zur Herstellung einer Betonmischung umfassend einen solchen Zementvormischer und ein Verfahren zur Herstellung einer Zementsuspension und/oder einer Beton- oder Mörtelmischung.

Im Bauwesen haben Betonfertigteile aufgrund ihrer witterungsunabhängigen Fertigung eine sehr große Bedeutung. Die Fertigteile können ganzjährlich in hoher Qualität produziert werden. Die Herstellung von Beton ist jedoch mit aktuellen Techniken mit einem großen Material- und Energieeinsatz verbunden. Um einen effizienten Prozess zur Herstellung der Fertigteile zu gewährleisten, muss der Beton eine schnelle Festigkeitsentwicklung aufweisen, damit die Umlaufzeit der Herstellung der Fertigteile möglichst geringgehalten wird. Eine schnelle Festigkeitsentwicklung wird typischerweise mit hochreaktiven Portlandzementen und einer Wärmebehandlung der Betone gewährleistet. Hochreaktive Portlandzemente sind jedoch sehr teuer und weisen einen erheblichen CO₂-Fußabdruck auf. Die zusätzliche Wärmebehandlung von Betonen kann mittels Heißdampf oder Thermoöl direkt in der Schalung oder in Wärmekammern mit Heißluft realisiert werden. Damit werden erhebliche Mengen Brennstoffe verbraucht, welche wiederrum einen hohen CO₂-Ausstoß verursachen. Zudem wird rund ein Drittel der produzierten Wärme für das Aufwärmen der Stahlschalungen verbraucht und dieser Anteil steht somit ebenfalls nicht zur Beschleunigung der chemischen Reaktion zur Verfügung. Dieser Problematik wird u.a. durch Weisheit et al.; Möglichkeiten der Wärmerückgewinnung in der Betonfertigteilherstellung, 2018, i-bausil, Weimar, Deutschland, s.1146-1153, Band 1, ISBN 78-3-00-059950-7 aufgegriffen und erörtert.

Eine Wärmebehandlung kann außerdem nicht beliebig gesteigert werden, da zu hohe Behandlungstemperaturen vom Beton zu Strukturschäden und zu erheblichen Einbußen in der Dauerhaftigkeit des Betons führen können. Dies wird u.a. durch Stark, Jochen; Wicht, Bernd (2013): Dauerhaftigkeit von Beton. 2., aktualisierte und erw. Aufl. Berlin: Springer Vieweg erläutert

Die Verwendung chemischer Beschleuniger ermöglicht eine Steigerung der Druckfestigkeit. Die chemischen Beschleuniger können jedoch negativ mit anderen Betonbestandteilen interagieren und sind als Ersatz der Wärmebehandlung ggf. nicht wirtschaftlich. Weiterhin reicht die Druckfestigkeit, welche durch chemische Beschleuniger erreicht wird, bei niedrigen Temperaturen u. U. nicht aus, um einen schnellen und effizienten Prozess aufrechtzuerhalten.

Die DE 10 2017 206 660 A1 beschreibt eine Vorrichtung zur Herstellung einer Beton- oder Mörtelmischung direkt in einem Betonmischer unter Einsatz von hochfrequenten Schwingungen. Diese hochfrequenten Schwingungen werden in die Beton- oder Mörtelmischung, welche Zement, Sand, Kies, Splitt, gegebenenfalls weitere Zusatzmittel und Wasser enthält, übertragen.

Die RU2496748C1, RU2533516C1 und beschreiben Verfahren zum Mischen und ultraschallbehandeln von Wasser und oder Zement-Wasser-Mischungen wobei sich diese Verfahren sich in der Wahl der Ultraschall-Parameter und den daraus erwachsenden physikalischen Effekten mit Bezug auf die vorliegende Erfindung unterscheiden. Die RU2496748C1 offenbart ebenfalls einen Zementvormischer nach dem Oberbegriff des Anspruchs 1 und ein Verfahren zum Bereitstellen einer Zementsuspension nach dem Oberbegriff des Anspruchs 10.

Die Herstellung der Zementsuspension im Labormaßstab wird überdies beschrieben in "The Influence of Power Ultrasound on Setting and Strength Development of Cement Systensions" von Horst-Micahel Ludwig ET AL vom 20. Januar 2016, Seiten 1-146 und in "Einfluss von Leistungs-Ultraschall auf die Fließeigenschaften und frühe Hydratation von Portland-Zementleim" MASTER'S THESIS, BAUHAUS-UNIVERSI-TÄT WEIMAR, DE vom 30. November 2010, Seiten 1-145.

In den vorgenannten Dokumenten wird eine Intensität bis 2,5 W/cm² beschrieben, welche in dem Bereich der sog. stabilen Kavitation führt. Das bedeutet Gas-/Dampfblasen wachsen und oszillieren über viele akustische Zyklen um ihre Position. Siehe u.a. Mason, Timothy James; Lorimer, John Phillip (2002): Applied sonochemistry. The uses of power ultrasound in chemistry and processing. Weinheim: Wiley-VCH.

In der vorliegenden Erfindung werden deutlich höhere Intensitäten (25 - 250 W/cm²) gewählt, um eine sog. transiente Kavitation zu erzeugen. Dies bedeutet (Gas-/Dampfblasen wachsen im Ultraschallfeld und existieren nur für einige wenige akustische Zyklen, bevor sie unter Freisetzung großer Mengen Energie (Wärme + Druck) implodieren und dadurch eine Kavitation erzeugen
Des Weiteren wird in RU2496748C1, RU2533516C1 eine Erhöhung des Umgebungsdruckes während des Beschallens vorgeschlagen, wohingegen die vorliegende Erfindung bevorzugt bei Umgebungsdruck (1 bar +/- 0.1 bar) arbeitet.

Die RU2410237C1 offenbart Intensitäten im Bereich der Erfindungsmeldung 7-70*10⁴ W/m² allerdings ohne Angaben von Ultraschall-Amplituden und mit dem Ziel Zement zu dispergieren und/oder aufzumahlen.

Durch die vorliegende Erfindung soll ein Zementvormischer der eingangs genannten Art sowie ein Verfahren der eingangs genannten Art so beschrieben werden, dass dieser Zementvormischer in bestehende Anlagen integrierbar ist und andererseits durch das Verfahren mit dieser Vorrichtung eine schnellere, effizientere und kostengünstige Festigkeitsentwicklung des Betons ermöglicht.

Die vorliegende Erfindung löst die vorgenannte Aufgabe durch das Bereitstellen eines Zementvormischers mit den Merkmalen des Anspruchs 1, sowie durch das Bereitstellen einer Vorrichtung mit den Merkmalen des Anspruchs 7 und durch das Bereitstellen eines Verfahrens mit den Merkmalen des Anspruchs 10.

Ein erfindungsgemäßer Zementvormischer nach Anspruch 1 umfasst einen Behandlungsbehälter mit einem Behandlungsraum, wobei der Behandlungsbehälter eine Seitenwandung und einen Boden aufweist. Er umfasst zudem mindestens ein Rührwerk, welches zumindest teilweise in den Behandlungsraum hineinragt, wobei das Rührwerk mit einer Welle mit einer Drehachse verbunden ist. Zudem umfasst der Zementvormischer mindestens eine Ultraschallsonde, welche zumindest teilweise in den Behandlungsraum hineinragt. Schließlich umfasst der Zementvormischer mindestens einem Ultraschallschwinger, z.B. ein Piezoelement, welcher die mindestens eine Ultraschallsonde mit Ultraschall beaufschlagt.

Die Ultraschallsonde ist insbesondere als Sonotrode ausgebildet und arbeitet in folgendem Bereich (Werte beziehen sich auf T=25°C und Normaldruck):
- Intensität des von der Ultraschallsonde emittierten Ultraschalls: 25-250 W/cm² Wenn Ultraschall in ein Medium eingebracht wird, werden die Partikel und das Medium in Schwingung versetzt. Diese Schwingung überträgt kinetische Energie der Ultraschallwelle. Die Intensität (I) entspricht dabei der Leistung z.B. Watt die pro Fläche transportiert wird. Die Einheit ist Leistung pro Fläche (z.B. W/cm²)
- Amplitude des von der Ultraschallsonde emittierten Ultraschalls: 15-500 µm.

Die Amplitude (u) beschreibt die Auslenkung der Ultraschallwelle (z.B. in µm) Bei gleichbleibender Frequenz führen höhere Amplituden zu einer Erhöhung der Intensität. Je größer die Amplitude ist, desto größer sind die Druckunterschiede während Hochdruck- und Niederdruckzyklen.
- Frequenz des von der Ultraschallsonde ausgesandten Ultraschalls: bevorzugt 10-30 kHz

Die Frequenz (f) beschreibt die Rate der Schwingungen an der Spitze der Ultraschallsonde. Da die Bildung, das Wachstum und die Implosion von Dampfblasen ein zeitabhängiger Prozess ist, führen höhere Frequenzen zu kleineren Kavitationsblasen.
- Spezifischer Energieeintrag (ins Medium - Wasser): bevorzugt 25-250 Ws/ml

Eine Ermittlung der vorgenannten Werte kann beispielsweise in Wasser elektroakustisch mittels eines Hydrophons erfolgen.

Der erfindungsgemäße Zementvormischer weist zumindest eine erste Einführöffnung für die Zuführung von Zement auf und einen Ablauf zur Strömungszuleitung einer vom Zementvormischer bereitgestellten Zementsuspension in eine Betonmischvorrichtung bzw. in einen Betonmischer.

Im Weiteren kann der erfindungsgemäße Zementvormischer eine Steuer- und/oder Regelvorrichtung aufweisen, welche ausgerüstet ist, zum Einstellen des Betriebs des Zementvormischers im o.g. Betriebsbereich.

Die Seitenwandung und der Boden schließen den Behandlungsraum seitlich und nach unten ab. Die Seitenwandung verläuft insbesondere entlang der Drehachse des Rührwerks. Ein Deckel kann den Behandlungsraum zumindest teilweise nach oben hin schließen.

Durch die Einführöffnung kann neben der Zuführung von Zement auch Wasser zugeführt werden. Alternativ kann Wasser über eine weitere Zuführleitung durch eine weitere Einführöffnung erfolgen.

Der Ablauf kann vorzugsweise eine Ablauföffnung aufweisen. Diese ist vorzugsweise im Boden des Behandlungsbehälters angeordnet. Der Ablauf kann beispielsweise als Ablaufrohr mit endständigem Flanschanschluss ausgebildet sein. Auch ein Fallschacht ist als Ablauf denkbar.

Der Ablauf weist eine Regelvorrichtung, beispielsweise eine Dosiervorrichtung, insbesondere ein Dosierventil auf, mittels welcher eine Regelung der Zulaufmenge an Zementsuspension in den Betonmischer erfolgen kann. Alternativ zu einem Ventil kann auch eine regelbare Klappe oder eine Schleuse vorgesehen sein.

Ebenso kann der Zulauf eine Regelvorrichtung zur Regelung der Zulaufmenge an Zement und/oder Wasser und/oder weiterer Zusatzmittel in den Behandlungsbehälter. Es kann sich z.B. um ein Feststoffventil handeln oder um eine regelbare Feststoffklappe. Wird das Wasser und/oder die weiteren Zusatzmittel durch gesonderte Zuläufe, z.B. Zulaufleitungen, in den Behandlungsbehälter zugeführt, so können diese auch jeweils eine gesonderte Regelvorrichtung aufweisen.

Im Zementvormischer kann das Rührwerk über die Welle mit einer Antriebseinheit gekoppelt sein und sich innerhalb des Behandlungsraums durch Rotation bewegen.

Der Ultraschallschwinger kann einen Regler zur Einstellung einer Amplitude der Schwingungen umfassen. Der Verstärker und die mittels diesem Verstärker vornehmbare Einstellung der Amplitude sowie die sich daraus ergebende Intensität der Ultraschallschwingungen ermöglicht eine einfache Anpassung der Schwingungen an unterschiedliche Erfordernisse bei der Herstellung verschiedener Zementsuspensionen. Diese Einstellung und das Zeitintervall der Ultraschallbehandlung entspricht einem Energieeintrag, welcher auf das Volumen der Zementsuspension angepasst werden kann.

In einer weiteren Ausführungsform des Zementvormischers weist der Zementvormischer eine mechanische Schnittstelle, vorzugsweise einen Flansch auf, über welchen er, vorzugsweise mediumsdicht, mit dem Betonmischer verbunden werden kann.

Dazu kann der Betonmischer einen Gegenflansch aufweisen, um diesen lösbar mit dem Flansch vom Zementvormischer als eine Flanschverbindung zu verbinden. In diesem Fall kann ein Ablaufrohr im Boden des Behandlungsbehälters zur Überführung der erzeugten Zementsuspension beispielsweise in einen Beton- oder Mörtelmischer anwesend sein.

Nach dem Zementvormischer der vorliegenden Erfindung ragt die mindestens eine Ultraschallsonde durch die Seitenwandung des Behandlungsbehälters zumindest teilweise in den Behandlungsraum hinein.

In einer weiteren Ausführungsform des Zementvormischers weist der Behandlungsbehälter eine achsensymmetrische, vorzugsweise rotationssymmetrische Seitenwandung auf, wobei die Symmetrieachse der Seitenwandung vorzugsweise parallel zur Drehachse des Rührwerks verläuft.

Im Fall einer rotationssymmetrischen Seitenwandung weist diese eine weitestgehend zylindrische Form auf. Dabei können die Symmetrieachse und die Drehachse koinzidieren.

In einer weiteren Ausführungsform des Zementvormischers weist die Seitenwandung in der Hälfte zum Boden hin eine Ausweitung auf, welche um den gesamten Umfang der Seitenwandung konzentrisch zur Drehachse verläuft. Die Ausweitung verläuft von der Drehachse weg.

Die Ultraschallsonden sind in einer weiteren Ausführungsform in der Seitenwandung im Bereich der Ausweitung angeordnet.

In einer weiteren Ausführungsform des Zementvormischers ragen mindestens zwei Ultraschallsonden, bevorzugt drei oder vier Ultraschallsonden, mit gleichem Winkel zueinander um die Symmetrieachse der Seitenwandung verteilt in den Behandlungsraum hinein.

In einer weiteren Ausführungsform des Zementvormischers hat mindestens eine Ultraschallsonde eine Längsachse und die Längsachse ist mit einem Winkel von 50° bis 70°, insbesondere von 55° bis 65° zur Symmetrieachse der Seitenwandung des Behandlungsbehälters angeordnet und in Richtung des Bodens des Behandlungsbehälters ausgerichtet.

Dabei weist die Ultraschallsonde ein Ende im Innern des Behandlungsraums auf, welches in Richtung Boden des Behandlungsbehälters ausgerichtet ist.

In einer weiteren Ausführungsform des Zementvormischers ist das Rührwerk derart angeordnet, dass im Betrieb der Einzug von Feststoff im Zentrum des Behandlungsraums erfolgt.

Das Zentrum des Zementvormischers befindet sich um die Welle des Rührwerks herum. Durch das Drehen der Welle mit den angebrachten Rührwerkzeugen, kommt es zu einer sogenannten Trombenbildung. Diese gebildete Trombe befördert das Material nach im Zentrum bzw. im Bereich der Längsachse der Vorrichtung nach unten zu den Rührorganen und lässt es entlang des Randes des Zementvormischers wieder aufsteigen.

So kann man eine Strömung im Medium erreichen, wobei die Zementsuspension wieder und wieder an den Sonotroden vorbeigeführt wird. Die Größe der Trombe wird von der Drehzahl und dem Rührwerksdurchmesser bestimmt, kann der Dimensionierung des Zementvormischers angepasst werden.

In einer weiteren Ausführungsform des Zementvormischers kann dieser eine Steuer- und/oder Auswerteeinheit aufweisen, zur Steuerung des Rührwerks derart, dass der Betrieb bei Drehzahlen von 200 Umdrehungen pro Minute bis 300 Umdrehungen pro Minute erfolgt.

Das Rührwerk kann, um eine gute Homogenisierung der Zementsuspension zu gewährleisten, in einem Arbeitsbereich von 200 Umdrehungen pro Minute bis 300 Umdrehungen pro Minute arbeiten.

In einer weiteren Ausführungsform des Zementvormischers ist das Rührwerk derart ausgestaltet, dass das Rührwerk im Betrieb eine Beförderung der Zementsuspension zum Boden und wieder hinauf des Behandlungsraums bewirkt.

Hierfür weist das Rührwerk eine Neigung der Rührblätter bzw. Propeller um 50-55°, vorzugsweise um 52-54° auf, um den Auf- und Abwärtsstrom zu begünstigen
In einer weiteren Ausführungsform des Zementvormischers weist der Zementvormischer einen Sensor zum Erfassen des Füllstands des Zementvormischers aufweist. Die Füllstandsmessung kann beispielsweise per Radarwellen oder Ultraschallwellen erfolgen.

In einer weiteren Ausführungsform des Zementvormischers ist die Steuer- und/oder Auswerteeinheit ausgelegt zur Steuerung der Rührgeschwindigkeit des Rührwerks und/oder zur Steuerung des Ultraschallschwingers, vorzugsweise des Energieeintrags des Ultraschallschwingers, in Abhängigkeit vom ermittelten Füllstand.

Dabei kann die Steuer- und/oder Auswertevorrichtung insbesondere den spezifischen Energieeintrag pro Volumeneinheit der Zementsuspension steuern oder erfassen. Dieser Energieeintrag kann aber auch berechnet werden.

Die Steuer- und/oder Auswertevorrichtung kann zudem in einer weiteren Ausführungsform auch den Zulauf des Zements, des Wassers und gegebenenfalls der Zusatzmittel steuern. Der Zulauf von Wasser kann beispielsweise über den Stand der Füllstandsmessung im Behandlungsbehälter erfolgen.

Die Steuer- und/oder Auswertevorrichtung kann in einer weiteren Ausführungsform ebenfalls den Ablauf der Zementsuspension steuern, beispielsweise in Abhängigkeit des Energieeintrags pro Volumeneinheit der Zementsuspension.

Die Erfindung umfasst ebenfalls eine Vorrichtung zur Herstellung einer Betonmischung umfassend einen Betonmischer und einen erfindungsgemäßen Zementvormischer.

Dabei kann der Zementvormischer strömungsmechanisch, vorzugsweise durch eine Flanschverbindung zwischen einem Ablauf des Zementvormischers und einem Zulauf des Betonmischers, mit dem Betonmischer verbunden sein.

Die Verbindung kann mechanisch erfolgen, wobei beispielsweise über die Passung der Rohre die Verbindung gewährleistet wird.

In einer weiteren Ausführungsform der Vorrichtung weist die Vorrichtung zumindest eines der folgenden Elemente auf: einen ersten Zementbehälter, einen zweiten Zementbehälter, einen Wassertank und/oder einen Zusatzmittelbehälter aufweist, wobei der Zulauf als ein Zulaufrohr oder Zulaufschacht ausgebildet ist, welcher lösbar, vorzugsweise mittels einer Flanschverbindung, mit zumindest einem ersten Zementbehälter und/oder einem Wassertank und/oder einem Zusatzbehälter der Vorrichtung verbunden ist.

In einer weiteren Ausführungsform der Vorrichtung umfasst die Vorrichtung eine Dosiervorrichtung zwischen dem Zementvormischer und dem Betonmischer, welche die Dosierung der Zementsuspension in Abhängigkeit von der zugeführten Menge an Sand, Kies oder Splitt regelt.

Die Menge an zugeführtem Sand, Kies oder Splitt (Gesteinskörnung) kann sensorisch erfasst werden oder über die Zulaufzeit bei geöffnetem Ventil. Auch ein Mengendurchflusssensor oder ein Wägeband kann die entsprechende Menge an Gesteinskörnung erfassen.

Die Dosiervorrichtung befindet sich zwischen dem Ablauf des Zementvormischers und dem Zulauf des Betonmischers.

Der Betonmischer kann zudem ebenfalls mit Ultraschallsonden versehen sein, welche Ultraschallschwingungen in die Beton- oder Mörtelmischung einbringen können.

Der Erfindung liegt ebenfalls ein Verfahren zum Bereitstellen einer Zementsuspension nach Anspruch 10 zugrunde, welches zumindest die folgenden Schritte aufweist:
- Bereitstellen von Zement, Wasser und gegebenenfalls zumindest einem Zusatzmittel in einen mit einem Behandlungsraum aufweisenden Behandlungsbehälter,
- Mischen mittels mindestens einem zumindest teilweise in den Behandlungsraum hineinragendem Rührwerk zur Erzeugung einer Zementsuspension, wobei das Rührwerk mit einer Welle mit einer Drehachse verbunden ist,
- Übertragen von Ultraschallschwingungen mittels mindestens einer zumindest teilweise in den Behandlungsraum hineinragenden Ultraschallsonde auf die Zementsuspension
- Ableiten der Zementsuspension über einen Ablauf zur Weiterverarbeitung, insbesondere in einen Betonmischer,
wobei der ausgesandte Ultraschall eine Intensität von 25-250 W/cm2 und eine Amplitude von 15-500 µm aufweist.

Die Zugabe von Zusatzmittel ist optional. Bei der Bereitstellung der Zementsuspension kann auf Zusatzmittel verzichtet werden, in welchem Fall lediglich Zement und Wasser bereitgestellt werden.

Insbesondere werden im Verfahren zur Herstellung einer Zementsuspension Zement, Wasser und gegebenenfalls Zusatzmittel in einem erfindungsgemäßen Zementvormischer suspendiert.

Insbesondere enthält die Zementsuspension
- von 50 Gew. Teile bis 80 Gew. Teile Zement
- von 20 Gew. Teile bis 40 Gew. Teile Wasser
- von 0 bis 10 Gew. Teile Zusatzmittel
bezogen auf die Gesamtmasse der Zementsuspension, wobei sich alle Komponenten in der Zementsuspension auf 100 Gew. Teile aufaddieren.

Die vorgenannten Zusatzmittel sind als Betonzusatzmittel zu verstehen. Dies sind flüssige, pulverförmige oder granulatartige Stoffe, die dem Beton während des Mischens in kleinen Mengen, bezogen auf den Zementgehalt, zugegeben werden. Sie beeinflussen durch chemische und/oder physikalische Wirkung die Eigenschaften des Frisch- oder Festbetons. In Beton nach DIN EN 206-1/DIN 1045-2 (in der aktuellen Variante zum Zeitpunkt 07/2019) dürfen nur Betonzusatzmittel nach DIN EN 934-2 (in der aktuellen Variante) oder Betonzusatzmittel mit allgemeiner bauaufsichtlicher Zulassung verwendet werden. Gesteinskörnungen werden allgemein nicht als Betonzusatzmittel verstanden.

Insbesondere wird in dem erfindungsgemäßen Verfahren das Rührwerk mit einer Drehzahl von 50 Umdrehungen pro Minute bis 500 Umdrehungen pro Minute betrieben.

Die Ultraschallsonden übertragen insbesondere Ultraschall im Frequenzbereich von 16 kHz bis 30 kHz, insbesondere im Frequenzbereich von 18 kHz bis 22 kHz in die Zementsuspension.

Das Herstellen des Betons oder des Mörtels erfolgt insbesondere unter Verwendung von einer Kombination des erfindungsgemäßen Zementvormischers mit einem Betonmischer.

Das Verfahren kann entweder im Batch-Prozess oder im kontinuierlichen Verfahren betrieben werden. Im Batch-Prozess werden die Bestandteile in den Behandlungsbehälter gegeben, unter Ultraschall und durch Rühren zu einer aktivierten Zementsuspension vermengt und anschließend beispielsweise in einen Betonmischer überführt. Im kontinuierlichen Verfahren werden die Bestandteile kontinuierlich in den Behandlungsbehälter gegeben und das Verfahren so betrieben, dass die aktivierte Zementsuspension kontinuierlich aus dem Zementvormischer abgezogen werden kann und beispielsweise in den Betonmischer überführt werden kann.

Der erfindungsgemäße Zementvormischer ermöglicht es, eine besonders effiziente Homogenisierung und eine physikalische und chemische Aktivierung des Bindemittels Zement. Da die Ultraschallbehandlung sich im Zementvormischer auf die Komponenten Zement, Wasser und gegebenenfalls Zusatzmittel beschränkt, kann die durch hochfrequente Ultraschallschwingungen erzeugte Energie direkt zur Aktivierung des Bindemittels Zement verwendet werden. Dies ermöglicht eine deutlich verbesserte Nutzung der eingetragenen Energie im Vergleich zur Verwendung von Ultraschallschwingungen auf ein Gemisch von Zement, Wasser, Zusatzstoffe und chemisch inaktivem Sand, Kies oder Splitt. Der reaktive Teil des Betons, Zement und Wasser, bildet lediglich 20- 35% des Betons, der chemisch inaktive Teil Sand, Kies und Splitt den restlichen Anteil. Daher wird mit der erfindungsgemäßen Vorrichtung die Energie für einen viel kleineren Anteil an Stoffen aufgewendet und wird daher viel effizienter genutzt. Zudem ermöglicht die Erzeugung der Zementsuspension im Zementvormischer das Erreichen eines deutlich besseren Durchmischungsgrads im Vergleich zu herkömmlichen Methoden.

Durch die bessere Aktivierung des reaktiven Teils des Betons und Homogenisierung der Zementsuspension im Zementvormischer kann eine deutliche Reduzierung des Zementgehalts erreicht werden. Weiterhin kann die Wärmebehandlungsdauer drastisch reduziert werden. Für diverse Anwendungen kann gänzlich auf die Wärmebehandlung verzichtet werden.

Zudem werden durch die Verwendung des erfindungsgemäßen Zementvormischers die Betonhärtung beschleunigt und die Verarbeitbarkeit (Verarbeitungseigenschaften) des Betons verbessert.

Der erfindungsgemäße Zementvormischer hat zudem den Vorteil, sehr einfach und kosteneffizient in eine bestehende Betonmischanlage als Zusatzmodul ohne großen Aufwand integriert werden zu können. Die Anordnung der Einführöffnung für die Zuführung von Zement (von Zementwaage) und gegebenenfalls Wasser sowie der Ablauf zur Strömungszuleitung für den Ablauf der fertigen Zementsuspension ist besonders geeignet für eine solche Integration. Die mechanische Schnittstelle, vorzugsweise ein Flansch, verbessert noch die effiziente Integration.

Durch die Verwendung der Füllstandsmessung kann die Zulaufmenge an Zement und / oder Wasser über die Änderung des Füllpegels bestimmt werden.

Besonders vorteilhaft erweist sich die Kombination der Verwendung der Ultraschallsonden mit dem Rührwerk. Zement und Wasser benötigen zum vollständigen Aufschließen deutlich höhere Mischintensitäten als die Gesteinskörnung des Betons. Daher zeigte sich ein synergistisches Zusammenwirken des Rührwerks mit den Ultraschallschwingungen zur Erzeugung einer aktivierten Zementsuspension.

Das erfindungsgemäße Rührwerk ermöglicht, insbesondere in Kombination mit dem Einbringen der Ultraschallenergie, eine relativ niedrige Drehzahl zur Erzeugung einer homogenen Suspension. Dies führt zu einem niedrigeren Stromverbrauch sowie zu einem reduzierten Verschleiß des Rührwerks.

Die vorliegende Erfindung kann, wie der vorangehenden Beschreibung zu entnehmen ist, für diverse Anwendungen im Bereich der Beton- und Mörtelherstellung verwendet werden. Demzufolge eröffnet die vorliegende Erfindung vielfältige Einsatz- und Verwendungsmöglichkeiten, so etwa in der Herstellung von Betonfertigteilen. Die hier genannten und beschriebenen Varianten und Merkmale können ebenfalls in Kombination zweier oder mehrerer Varianten oder Merkmale untereinander durchgeführt werden und diese Kombinationen werden von der vorliegenden Erfindung ebenfalls umfasst, gegeben solche Kombinationen sind nicht gegenseitig inkonsistent und gehen nicht über den Schutzumfang der beigefügten Ansprüche hinaus.

Nachfolgend wird nun ein Ausführungsbeispiel der Erfindung anhand der beiliegenden Zeichnung näher beschrieben.

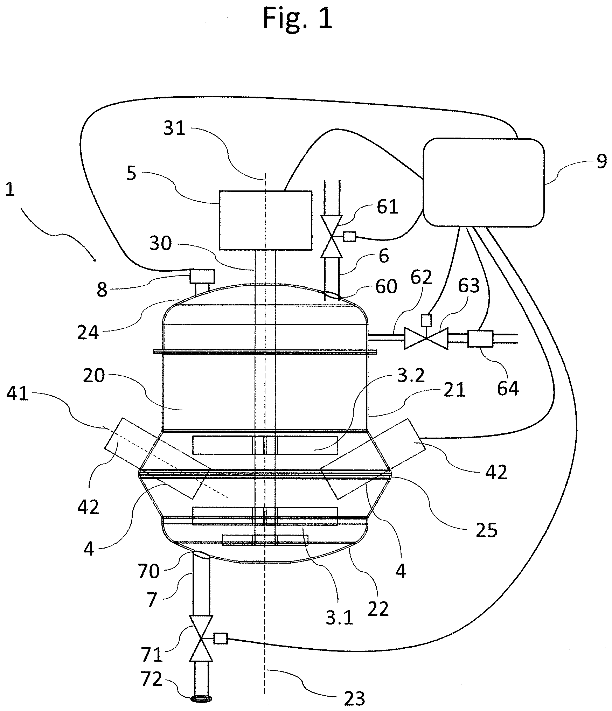

Darin zeigt Fig. 1 eine schematische Querschnittsansicht eines Ausführungsbeispiels des Zementvormischers gemäß der vorliegenden Erfindung;
Fig. 2 zeigt eine Draufsicht des Ausführungsbeispiels aus Fig. 1;
Fig. 3 zeigt eine schematische Darstellung einer Betonherstellung nach herkömmlichem Verfahren, und
Fig. 4 zeigt eine schematische Darstellung einer Betonherstellung nach einer Ausführungsform der vorliegenden Erfindung.

Für die gesamte weitere Beschreibung gilt folgende Festlegung: Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

Wie in Fig. 1 zu erkennen ist, umfasst der Zementvormischer 1 einen Behandlungsbehälter 2, welcher einen Behandlungsraum 20 hat. Der Behandlungsraum 20 ist seitlich durch eine rotationssymmetrische Seitenwandung 21 abgegrenzt und nach unten hin durch einen Boden 22. Nach oben hin ist der Behandlungsraum durch einen Deckel 24 geschlossen. Ein Rührwerk 3 mit einer Welle 30 ragt in den Behandlungsraum 20 hinein, wobei die Welle durch eine Öffnung im Deckel 24 in den Behandlungsraum hineinragt.

In dieser Ausführungsform weist die Seitenwandung 21 in der unteren Hälfte eine Ausweitung 25 nach außen auf. In diesem Bereich sind vier Ultraschallsonden 4 angebracht.

Das Rührwerk 3 weist in dieser Ausführungsform zwei Agitatoren (3.1, 3.2) auf, welche an der Welle 30 befestigt sind. Die Rührblätter der Agitatoren (3.1, 3.2) sind derart beabstandet, dass sie die Ultraschallsonden 4 nicht berühren. Die Welle 30 wird über die Drehscheibe durch einen externen Antrieb 5 in eine Drehbewegung versetzt.

Die Welle hat eine Drehachse 31, welche mit der Symmetrieachse 23 der Seitenwandung 21 koinzidiert. Die Ausweitung 25 ist konzentrisch zur Symmetrieachse 23 nach außen (von der Symmetrieachse 23 weg) angeordnet.

Seitlich sind mit einem Winkel von 60° zur vertikalen Symmetrieachse 23 der Seitenwandlung 21 die Ultraschallsonden 4 angeordnet, welche nach unten hin zum Boden 22 gerichtet sind.

Eine Steuer- und/oder Auswerteeinheit 9 erfasst in dieser Ausführungsform die Parameter Füllstand, Energieeintrag durch die Ultraschallsonden und zugegebene Wassermenge durch den Wassermengenmesser 64. Sie steuert den Antrieb 5 für das Rührwerk 3 (Einstellen der Umdrehungszahl des Rührwerks 3), die Ultraschallschwinger 42 in Amplitude und Frequenz des Ultraschalls (dabei wird der Energieeintrag durch die Steuer- und/oder Auswerteeinheit 9 ermittelt), das Feststoffventil 61, das Wassersteuerventil, sowie den Ablauf der Suspension über das Dosierventil 71.

Weiterhin befindet sich im Deckel 24 eine Einführöffnung 60, in welche eine Rohrleitung 6 für den Zulauf von Feststoff hineinragt. Dieser wird über das Feststoffventil 61 gesteuert. In dieser Ausführungsform wird Zement beigefügt und die Zugabe des Zements über das Feststoffventil 61 gesteuert. Durch die Seitenwandung 21 ist eine Wassereinführleitung 62 für Wasser angeordnet. So kann über das Wassersteuerventil 63 Wasser zur Erzeugung der Zementsuspension beigefügt werden. Die Menge Wasser, welche zugegeben wird, wird in dieser Ausführungsform durch den Wassermengenmesser 64 bestimmt.

Der Füllstandssensor 8 ermittelt den Füllstand innerhalb des Behandlungsraums 20. Diese Füllstandsmessung kann beispielsweise durch die Steuer- und/oder Auswerteeinheit als Grundlage verwendet werden, um die Zugabe von Wasser zu steuern.

Im Boden 22 des Behandlungsbehälters 2 befindet sich ein Ablauf 70 für die Strömungszuleitung 7 zur Ableitung der fertigen Zementsuspension zum Betonmischer. Die Ableitung der Zementsuspension wird in Abhängigkeit vom spezifischen Energieeintrag pro Volumeneinheit über die Dosiervorrichtung 71 geregelt. Die Ablaufleitung 7 ist mit einem Flansch 72 versehen, mit welchem die Ablaufleitung 7 schnell und unkompliziert mit einem Betonmischer verbunden werden kann.

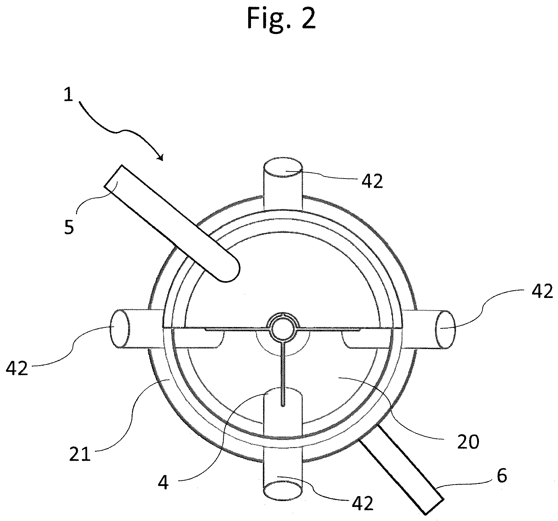

Fig. 2 zeigt eine Draufsicht der Ausführungsform aus Fig. 1, wobei hier die Anordnung der vier Ultraschallsonden 4 mit einem Winkel von 90° zueinander in der Seitenwandung 21 besonders sichtbar wird. Der Blick in den Behandlungsraum 20 zeigt, dass die Ultraschallsonden 4 zur Symmetrieachse 23 der Seitenwandung 21 gerichtet sind.

Ein Flansch kann mittels Befestigungslöcher mit dem Antrieb gekoppelt werden um den Antrieb der Welle 30 und damit des Rührwerks 3.1 und 3.2 zu ermöglichen.

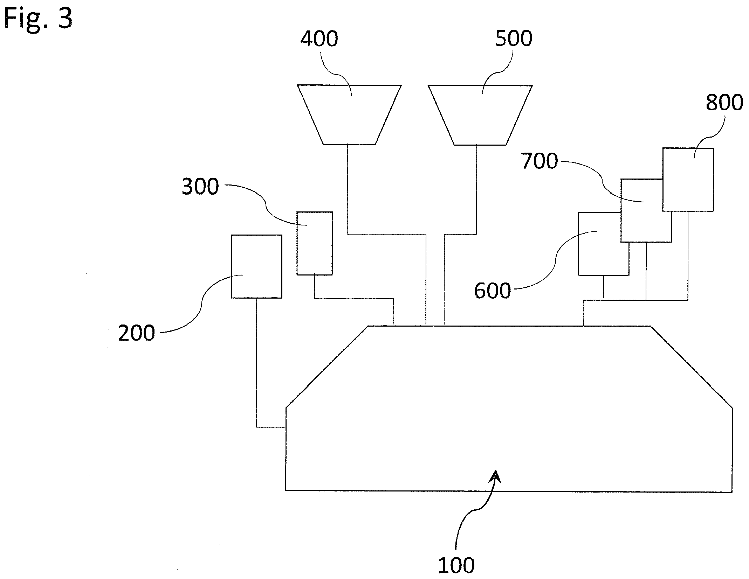

Fig. 3 zeigt schematisch das Verfahren nach herkömmlicher Methode. Dabei werden in einem Betonmischer 100 Wasser aus dem Wasserzulauf 200 eingefüllt, sowie Zusatzmittel aus dem Zusatzmittelbehälter 300, Zement aus dem ersten oder zweiten Zementbehälter 400 und 500 und Gesteinskörnung (Sand, Kies und / oder Splitt) aus den entsprechenden Behälter 600, 700 und 800 eingefüllt. Die Komponenten werden direkt im Betonmischer gemischt um eine Betonmischung zu erhalten.

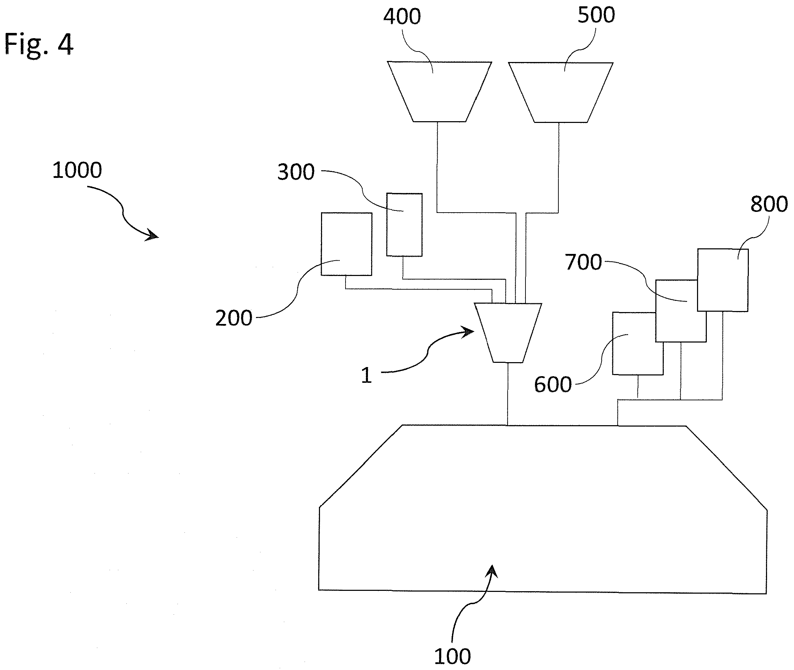

Im Unterschied zu dieser herkömmlichen Fahrweise wird im erfindungsgemäßen Verfahren, welcher schematisch nach einer Ausführungsform in Fig. 4 gezeigt ist, separat eine Zementsuspension im Zementvormischer 1 erzeugt. Dabei werden Wasser aus dem Wasserzulauf 200 und Zement aus den Zementbehälter 400 und/oder 500 sowie gegebenenfalls Zusatzmittel aus dem Zusatzmittelbehälter 300 im Zementvormischer zu einer Zementsuspension verarbeitet. Diese Zementsuspension wird dann aus dem Zementvormischer 1 in den Betonmischer 100 überführt. Im Betonmischer wird dann unter Zugabe der Gesteinskörnung aus den entsprechenden Behälter 600, 700 und 800 die Betonmischung erzeugt, welche dann weiterverarbeitet werden kann.

Die Kombination aus dem Zementvormischer 1 und dem Betonmischer 100 bildet die Vorrichtung 1000 zur Herstellung einer Betonmischung.

Dabei kann die Zubereitung der aktivierten Zementsuspension entweder im Batch-Prozess oder im kontinuierlichen Verfahren betrieben werden.

### Beispiel

Ein Beton wurde nach dem erfindungsgemäßen Verfahren zur Herstellung einer Zementsuspension hergestellt.

Ein erfindungsgemäßer Zementvormischer im Labormaßstab wie in Fig. 1 gezeigt mit einem Durchmesser von 400 mm bis zu 493 mm an der breitesten Stelle und einer Gesamthöhe von 550mm ist mit 4 Ultraschallsonden (Sonotroden) mit 90° Winkel zueinander um die Symmetrieachse des Behandlungsbehälters verteilt.

Im Behandlungsraum befinden sich 45 kg Zement, 20 Liter Wasser und 0,5 kg Fließmittel (Zusatzmittel).

Das Rührwerk wird mit einer Umdrehungszahl von 250 Umdrehungen pro Minute betrieben. Schwingungen werden im niedrigen Ultraschallbereich von 20 kHz über die Sonotroden in den Behandlungsraum geleitet.

Durch den Einsatz der Ultraschallbehandlung und des Mischwerkzeugs wird eine schnelle und effiziente Homogenisierung der Zementsuspension innerhalb von weniger als 180 Sekunden erreicht.

Die so hergestellte Zementsuspension wird in ein Betonmischer überführt. Hier werden 225 kg Gesteinskörnung hinzugefügt und der Beton gemischt.

Die Fließfähigkeit dieses Betons ist deutlich erhöht im Vergleich zu herkömmlichen Herstellmethoden und die Frühfestigkeit erheblich verbessert. Dies führt gerade bei der Herstellung von Betonfertigteilen zu entscheidenden Vorteilen und Fertigteile besserer Qualität, welche in kürzerer Zeit hergestellt werden können.

### Bezugszeichenliste

- 1: Zementvormischer
- 2: Behandlungsbehälter
- 20: Behandlungsraum
- 21: Seitenwandung
- 22: Boden
- 23: Symmetrieachse
- 24: Deckel
- 25: Ausweitung der Seitenwandung
- 3: Rührwerk
- 3.1: erster Agitator
- 3.2: zweiter Agitator
- 30: Welle
- 31: Drehachse
- 32: Antriebsscheibe
- 33: Befestigungslöcher
- 4: Ultraschallsonde (Sonotrode)
- 41: Längsachse der Ultraschallsonde
- 42: Ultraschallschwinger
- 5: Antrieb
- 6: Zulauf (Feststoffzulauf für Zement)
- 60: Einführöffnung
- 61: Feststoffventil
- 62: Einführleitung für Wasser
- 63: Wassersteuerventil
- 64: Wassermengenmesser
- 7: Strömungszuleitung
- 70: Ablauf
- 71: Dosiervorrichtung
- 72: Flansch
- 8: Füllstandssensor für den Füllstand im Zementvormischer
- 9: Steuer- und/oder Auswerteeinheit

- 100: Betonmischer
- 200: Wasserzulauf
- 300: Zusatzmittelbehälter
- 400: Zementbehälter
- 500: zweiter Zementbehälter
- 600: Sandbehälter
- 700: Kiesbehälter
- 800: Splittbehälter

- 1000: Vorrichtung

## Patentansprüche

1. Zementvormischer (1) umfassend
- einen Behandlungsbehälter (2) mit einem Behandlungsraum (20), wobei der Behandlungsbehälter (2) eine Seitenwandung (21) und einen Boden (22) aufweist,
- mindestens ein Rührwerk (3; 3.1, 3.2), welches zumindest teilweise in den Behandlungsraum (20) hineinragt, wobei das Rührwerk (3; 3.1, 3.2) mit einer Welle (30) mit einer Drehachse (31) verbunden ist,
- mindestens eine Ultraschallsonde (4), welche zumindest teilweise in den Behandlungsraum (20) hineinragt
- mindestens einem Ultraschallschwinger (42), welcher die mindestens eine Ultraschallsonde (4) mit Ultraschall beaufschlagt,
wobei der Zementvormischer (1) zumindest eine erste Einführöffnung (60) für die Zuführung von Zement aufweist und einen Ablauf (70) zur Strömungszuleitung (7) einer vom Zementvormischer (1) bereitgestellten Zementsuspension in einen Betonmischer,
**dadurch gekennzeichnet, dass** der Zementvormischer eine Steuer- und/oder Auswerteeinheit (9) aufweist, zum Einstellen des ausgesandten Ultraschalls mit einer Intensität von 25-250 W/cm2 und einer Amplitude von 15-500 µm, und dass die Ultraschallsonde ausgelegt ist zur Emission eines Ultraschalls mit einer Intensität von 25-250 W/cm² und einer Amplitude von 15-500 µm.

2. Zementvormischer (1) gemäß Anspruch 1, **dadurch gekennzeichnet, dass** die mindestens eine Ultraschallsonde durch die Seitenwandung (21) des Behandlungsbehälters (2) zumindest teilweise in den Behandlungsraum (20) hineinragt.

3. Zementvormischer (1) gemäß Anspruch 1 oder Anspruch 2, **dadurch gekennzeichnet, dass** der Behandlungsbehälter (2) eine achsensymmetrische, vorzugsweise rotationssymmetrische Seitenwandung (21) wobei die Symmetrieachse (23) der Seitenwandung (21) vorzugsweise parallel zur Drehachse (31) des Rührwerks (3; 3.1, 3.2) verläuft, und
wobei die Seitenwandung (21) in der Hälfte zum Boden (22) hin eine Ausweitung (25) aufweist, welche um den gesamten Umfang der Seitenwandung (21) konzentrisch zur Symmetrieachse (23) verläuft, und
und wobei die Ultraschallsonden (4) im Bereich der Ausweitung (25) in der Seitenwandung angeordnet sind.

4. Zementvormischer (1) gemäß einem der vorangehenden Ansprüche, **dadurch gekennzeichnet, dass** mindestens zwei Ultraschallsonden (4), bevorzugt drei oder mehr Ultraschallsonden (4), mit gleichem Winkel zueinander um die Symmetrieachse (23) der Seitenwandung (21) verteilt in den Behandlungsraum (20) hineinragen.

5. Zementvormischer (1) gemäß einem der vorangehenden Ansprüche, **dadurch gekennzeichnet, dass** die mindestens eine Ultraschallsonde (4) eine Längsachse (41) hat und die Längsachse (41) mit einem Winkel von 50° bis 70°, insbesondere von 55° bis 65° zur Symmetrieachse (23) der Seitenwandung (21) des Behandlungsbehälters (20) angeordnet und in Richtung des Bodens (22) des Behandlungsbehälters (2) ausgerichtet ist.

6. Zementvormischer (1) gemäß einem der vorangehenden Ansprüche, **dadurch gekennzeichnet, dass** der Zementvormischer (1) einen Füllstandssensor (8) zum Erfassen des Füllstands des Zementvormischers aufweist und dass die Steuer- und/oder Auswerteeinheit (9) ausgelegt ist zur Steuerung der Rührgeschwindigkeit des Rührwerks und/oder zur Steuerung des Ultraschallschwingers, vorzugsweise des Energieeintrags des Ultraschallschwingers, in Abhängigkeit von einem ermittelten Füllstand.

7. Vorrichtung (1000) zur Herstellung einer Betonmischung umfassend einen Betonmischer (100) und einen Zementvormischer (1) gemäß einem der vorangehenden Ansprüche.

8. Vorrichtung (1000) gemäß Anspruch 7, **dadurch gekennzeichnet, dass** der Zementvormischer (1) strömungsmechanisch, vorzugsweise durch eine Flanschverbindung (72) zwischen einem Ablauf (60) des Zementvormischers (1) und einem Zulauf des Betonmischers (100), mit dem Betonmischer (100) verbunden ist.

9. Vorrichtung (1000) nach Anspruch 7 oder 8, **dadurch gekennzeichnet, dass** die Vorrichtung zumindest einen der folgenden Elemente aufweist: einen ersten Zementbehälter (400), einen zweiten Zementbehälter (500), einen Wasserzulauf (200) und/oder einen Zusatzmittelbehälter (300),
wobei der Zulauf (6) als ein Zulaufrohr oder Zulaufschacht ausgebildet ist, welcher lösbar, vorzugsweise mittels einer Flanschverbindung, mit zumindest einem ersten Zementbehälter (400) und/oder einem Wassertank (200) und/oder einem Zusatzmittelbehälter (300) der Vorrichtung (1000) verbunden ist.

10. Verfahren zum Bereitstellen einer Zementsuspension, umfassend die folgenden Schritte:
- Bereitstellen von Zement, Wasser und gegebenenfalls zumindest einem Zusatzmittel in einen mit einem Behandlungsraum (20) aufweisenden Behandlungsbehälter (2),
- Mischen mittels mindestens einem zumindest teilweise in den Behandlungsraum (20) hineinragendes Rührwerk (3) zur Erzeugung einer Zementsuspension, wobei das Rührwerk (3) mit einer Welle (30) mit einer Drehachse (31) verbunden ist,
- Übertragen von Ultraschallschwingungen mittels mindestens einer zumindest teilweise in den Behandlungsraum (20) hineinragenden Ultraschallsonde (4),
- Ableiten der Zementsuspension über einen Ablauf (60) zur Weiterverarbeitung, insbesondere in einem Betonmischer,
**dadurch gekennzeichnet, dass** der ausgesandte Ultraschall eine Intensität von 25-250 W/cm2 und eine Amplitude von 15-500 µm aufweist.

11. Verfahren zum Bereitstellen einer Zementsuspension gemäß Anspruch 10,
**dadurch gekennzeichnet, dass** das Ableiten der Zementsuspension nach einem spezifischen Energieeintrag pro Volumeneinheit der Zementsuspension erfolgt.

12. Verfahren zum Bereitstellen einer Zementsuspension gemäß Anspruch 10 oder 11, **dadurch gekennzeichnet, dass** die Zementsuspension
- von 20 Gew. Teile bis 80 Gew. Teile Zement
- von 20 Gew. Teile bis 80 Gew. Teile Wasser
- von 0 bis 10 Gew. Teile Zusatzmittel
bezogen auf die Gesamtmasse der Zementsuspension enthält, wobei sich alle Komponenten in der Zementsuspension auf 100 Gew. Teile aufaddieren.

13. Verfahren gemäß einem der Ansprüche 10 bis 12, **dadurch gekennzeichnet, dass** das Rührwerk (3; 3.1, 3.2) mit einer Drehzahl von 50-500 Umdrehungen pro Minute, vorzugsweise 200-300 Umdrehungen pro Minute, betrieben wird.

14. Verfahren gemäß einem der Ansprüche 10 bis 13, **dadurch gekennzeichnet, dass** die Ultraschallsonden Ultraschall im Frequenzbereich von 16 kHz bis 30 kHz, insbesondere im Frequenzbereich von 18 kHz bis 22 kHz in die Zementsuspension übertragen.

15. Verfahren zum Mischen von Beton oder Mörtel, wobei eine Vorrichtung gemäß einem der Ansprüche 7 bis 9 verwendet wird.

## Claims

1. Cement premixer (1), comprising
- a treatment container (2) having a treatment space (20), wherein the treatment container (2) comprises a side wall (21) and a bottom (22),
- at least one stirring unit (3; 3.1, 3.2) which projects at least partially into the treatment space (20), wherein the stirring unit (3; 3.1, 3.2) is connected to a shaft (30) having an axis of rotation (31),
- at least one ultrasound probe (4) which projects at least partially into the treatment space (20),
- at least one ultrasonic oscillator (42) which applies ultrasound to the at least one ultrasonic probe (4),
wherein the cement premixer (1) has at least a first introduction opening (60) for the supply of cement and an outlet (70) for the flow supply line (7) of a cement suspension provided by the cement premixer (1) into a concrete mixer, **characterized in, that** the cement premixer has a control and/or evaluation unit (9) and for adjusting the emitted ultrasound with an intensity of 25-250 W/cm2 and an amplitude of 15-500 µm and that the ultrasonic probe is designed to emit an ultrasound with an intensity of 25-250 W/cm2 and an amplitude of 15-500 µm.

2. Cement premixer (1) according to claim 1, **characterized in that** the at least one ultrasonic probe projects at least partially into the treatment space (20) through the side wall (21) of the treatment container (2).

3. Cement premixer (1) according to claim 1 or claim 2, **characterized in that** the treatment container (2) has an axially symmetrical, preferably rotationally symmetrical side wall (21), wherein the axis of symmetry (23) of the side wall (21) preferably extends parallel to the axis of rotation (31) of the stirring unit (3; 3.1, 3.2) and wherein the side wall (21) has an extension (25) in the half towards the bottom (22), which extension (25) extends around the entire circumference of the side wall (21) concentrically to the axis of symmetry (23) and wherein the ultrasonic probes (4) are arranged in the area of the widening (25) in the side wall.

4. Cement premixer (1) according to one of the preceding claims, **characterized in that** at least two ultrasonic probes (4), preferably three or more ultrasonic probes (4), project into the treatment space (20) distributed at the same angle to one another about the axis of symmetry (23) of the side wall (21).

5. Cement premixer (1) according to one of the preceding claims, **characterized in that** the at least one ultrasonic probe (4) has a longitudinal axis (41) and the longitudinal axis (41) is arranged at an angle of 50° to 70°, in particular of 55° to 65° to the axis of symmetry (23) of the side wall (21) of the treatment container (20) and is aligned in the direction of the bottom (22) of the treatment container (2).

6. Cement premixer (1) according to one of the preceding claims, **characterized in that** the cement premixer (1) comprises a level sensor (8) for detecting the level of the cement premixer and that the control and/or evaluation unit (9) is designed to control the agitation speed of the stirring unit and/or to control the ultrasonic oscillator, preferably the energy input of the ultrasonic oscillator, as a function of the determined filling level.

7. Device (1000) for producing a concrete mix, comprising a concrete mixer (100) and a cement premixer (1) according to one of the preceding claims.

8. Device (1000) according to claim 7, **characterized in that** the cement premixer (1) is fluidically connected to the concrete mixer (100), preferably by a flanged connection (72) between an outlet (60) of the cement premixer (1) and an inlet of the concrete mixer (100).

9. Device (1000) according to claim 7 or 8, **characterized in that** the device comprises at least one of the following elements: a first cement container (400), a second cement container (500), a water inlet (200), and/or an admixture container (300),
wherein the inlet (6) is formed as an inlet pipe or inlet shaft, which is detachably connected, preferably by means of a flange connection, to at least a first cement container (400) and/or a water tank (200) and/or an admixture container (300) of the device (1000).

10. Method for providing a cement suspension, comprising the following steps:
- providing cement, water and optionally at least one admixture into a treatment container (2) having a treatment space (20),
- mixing by means of at least one stirring unit (3) projecting at least partially into the treatment space (20) to produce a cement suspension, wherein the stirring unit (3) is connected to a shaft (30) with an axis of rotation,
- transmitting ultrasonic oscillations by means of at least one ultrasonic probe (4) projecting at least partially into the treatment space (20),
- discharging the cement suspension via an outlet (60) for further processing, in particular in a concrete mixer, **characterized in, that** the emitted ultrasound has an intensity of 25-250 W/cm2 and an amplitude of 15-500 µm.

11. Method for providing a cement suspension according to claim 10, **characterized in that** the discharging of the cement suspension is performed according to a specific energy input per unit volume of the cement suspension.

12. Method for providing a cement suspension according to claim 10 or 11, **characterized in that** the cement suspension is
- from 20 parts by weight to 80 parts by weight cement
- from 20 parts by weight to 80 parts by weight water
- from 0 to 10 parts by weight admixture
based on the total mass of the cement suspension, with all components in the cement suspension adding up to 100 parts by weight.

13. Method according to one of claims 10 to 12, **characterized in that** the stirring unit (3; 3.1, 3.2) is operated at a speed of 50-500 revolutions per minute, preferably 200-300 revolutions per minute.

14. Method according to one of claims 10 to 13, **characterized in that** the ultrasonic probes transmit ultrasound in the frequency range from 16 kHz to 30 kHz, in particular in the frequency range from 18 kHz to 22 kHz, into the cement suspension.

15. Method for mixing concrete or mortar using a device according to one of claims 7 to 9.

## Revendications

1. Prémélangeur de ciment (1) comprenant
- une trémie de traitement (2) avec un espace de traitement (20), laquelle trémie de traitement (2) comporte une paroi latérale (21) et un fond (22),
- au moins un agitateur (3 ; 3.1, 3.2) qui dépasse au moins en partie dans l'espace de traitement (20), l'agitateur (3 ; 3.1, 3.2) étant relié par un arbre (30) à un axe de rotation (31),
- au moins une sonde à ultrasons (4) qui dépasse au moins en partie dans l'espace de traitement (20),
- au moins un générateur d'ultrasons (42) qui transmet des ultrasons à l'au moins une sonde à ultrasons (4),
lequel prémélangeur de ciment (1) comporte au moins une première ouverture d'introduction (60) pour amener du ciment et un écoulement (70) vers la conduite d'arrivée (7) d'une suspension de ciment préparée par le prémélangeur de ciment (1) vers une bétonnière, **caractérisé en ce que** le prémélangeur de ciment comporte une unité de commande et/ou d'analyse (9) pour régler les ultrasons émis à une intensité de 25 à 250 W/cm² et une amplitude de 15 à 500 µm, et **en ce que** la sonde à ultrasons est conçue pour émettre des ultrasons à une intensité de 25 à 250 W/cm² et une amplitude de 15 à 500 µm.

2. Prémélangeur de ciment (1) selon la revendication 1, **caractérisé en ce que** l'au moins une sonde à ultrasons dépasse au moins partiellement à travers la paroi latérale (21) de la trémie de traitement (2) dans l'espace de traitement (20).

3. Prémélangeur de ciment (1) selon la revendication 1 ou 2, **caractérisé en ce que** la trémie de traitement (2) comporte une paroi latérale (21) de symétrie axiale, de préférence symétrique en rotation, l'axe de symétrie (23) de la paroi latérale (21) étant de préférence parallèle à l'axe de rotation (31) de l'agitateur (3 ; 3.1, 3.2) et dans lequel la paroi latérale (21) présente dans sa moitié tournée vers le fond (22) un élargissement (25) qui suit toute la circonférence de la paroi latérale (21) de façon concentrique de l'axe de symétrie (23) et
dans lequel les sondes à ultrasons (4) sont disposées au niveau de l'élargissement (25) dans la paroi latérale.

4. Prémélangeur de ciment (1) selon l'une des revendications précédentes, **caractérisé en ce qu'**au moins deux sondes à ultrasons (4), de préférence trois sondes à ultrasons (4) ou plus, sont réparties à un même angle les unes par rapport aux autres autour de l'axe de symétrie (23) de la paroi latérale (21) et dépassent dans l'espace de traitement (20).

5. Prémélangeur de ciment (1) selon l'une des revendications précédentes, **caractérisé en ce que** l'au moins une sonde à ultrasons (4) possède un axe longitudinal (41) et l'axe longitudinal (41) est disposé à un angle de 50° à 70°, en particulier de 55° à 65° par rapport à l'axe de symétrie (23) de la paroi latérale (21) de la trémie de traitement (20) et orienté en direction du fond (22) de la trémie de traitement (2).

6. Prémélangeur de ciment (1) selon l'une des revendications précédentes, **caractérisé en ce que** le prémélangeur de ciment (1) comporte un capteur de niveau de remplissage (8) pour détecter le niveau de remplissage du prémélangeur de ciment et **en ce que** l'unité de commande et/ou d'analyse (9) est conçue pour commander la vitesse d'agitation de l'agitateur et/ou pour commander le générateur d'ultrasons, de préférence l'apport d'énergie du générateur d'ultrasons, en fonction du niveau de remplissage déterminé.

7. Dispositif (1000) pour la fabrication d'un mélange de béton comprenant une bétonnière (100) et un prémélangeur de ciment (1) selon l'une des revendications précédentes.

8. Dispositif (1000) selon la revendication 7, **caractérisé en ce que** le prémélangeur de ciment (1) est relié à la bétonnière (100) du point de vue de la mécanique des fluides, de préférence par un assemblage à bride (72) entre un écoulement (60) du prémélangeur de ciment (1) et une arrivée de la bétonnière (100).

9. Dispositif (1000) selon la revendication 7 ou 8, **caractérisé en ce qu'**il comporte au moins un des éléments suivants : une première trémie à ciment (400), une deuxième trémie à ciment (500), une arrivée d'eau (200) et/ou une trémie à additifs (300),
l'arrivée (6) étant conformée comme un tuyau d'arrivée ou une gaine d'arrivée qui est reliée de façon amovible, de préférence au moyen d'un assemblage à bride, avec au moins une première trémie à ciment (400) et/ou un réservoir d'eau (200) et/ou une trémie à additifs (300) du dispositif (1000).

10. Procédé pour préparer une suspension de ciment, comprenant les étapes suivantes :
- préparation de ciment, d'eau et éventuellement d'au moins un additif dans une trémie de traitement (2) comportant un espace de traitement (20) ;
- mélange au moyen d'au moins un agitateur (3) dépassant au moins en partie dans l'espace de traitement (20) afin de produire une suspension de ciment, l'agitateur (3) étant relié à un arbre (30) avec un axe de rotation (31) ;
- transmission de vibrations ultrasonores au moyen d'au moins une sonde à ultrasons (4) qui dépasse au moins en partie dans l'espace de traitement (20) ;
- extraction de la suspension de ciment par un écoulement (60) pour la suite du traitement, en particulier dans une bétonnière,
**caractérisé en ce que** les ultrasons émis ont une intensité de 25 à 250 W/cm² et une amplitude de 15 à 500 µm.

11. Procédé pour la préparation d'une suspension de ciment selon la revendication 10, **caractérisé en ce que** l'extraction de la suspension de ciment est effectuée après un apport d'énergie spécifique par unité de volume de la suspension de ciment.

12. Procédé pour la préparation d'une suspension de ciment selon la revendication 10 ou 11, **caractérisé en ce que** la suspension de ciment contient
- de 20 à 80 parts en poids de ciment,
- de 20 à 80 parts en poids d'eau,
- de 0 à 10 parts en poids d'additifs
par rapport à la masse totale de la suspension de ciment, la somme de tous les composants de la suspension de ciment s'élevant à 100 parts en poids.

13. Procédé selon l'une des revendications 10 à 12, **caractérisé en ce que** l'agitateur (3 ; 3.1, 3.2) est piloté à une vitesse de rotation de 50 à 500 tours par minute, de préférence de 200 à 300 tours par minute.

14. Procédé selon l'une des revendications 10 à 13, **caractérisé en ce que** les sondes à ultrasons transmettent des ultrasons dans la suspension de ciment dans la plage de fréquences de 16 kHz à 30 kHz, en particulier dans la plage de fréquences de 18 kHz à 22 kHz.

15. Procédé pour le mélange de béton ou de mortier, utilisant un dispositif selon l'une des revendications 7 à 9.
